# EUROPEAN PATENT APPLICATION

(11) **EP 4 737 806 A1**
(43) Date of publication of application: **06.05.2026**
(21) Application number: 25210625.7
(22) Date of filing: 23.10.2025
(51) Int. Cl.: F24C 15/32

(54) **COOKING APPLIANCE**

(30) Priority: 05.11.2024 KR 20240155169
(71) Applicant: LG Electronics Inc., Yeongdeungpo-gu Seoul 07336 (KR)
(72) Inventor: LEE, Suyong, 07796 Seoul (KR); PARK, Kyoung-Joon, 07796 Seoul (KR); YANG, Jaekyung, 07796 Seoul (KR); KWAG, Dongseong, 07796 Seoul (KR); YANG, Hak Soon, 07796 Seoul (KR)
(74) Representative: Schornack, Oliver

(57) **Abstract**

A cooking appliance is disclosed. The appliance includes a fan cover disposed at a cooking chamber and a fan configured to generate an airflow inside the fan cover. The fan cover comprises a front discharge port that defines a passage connecting an interior of the fan cover and the cooking chamber, and a guide protrusion configured to block, at a periphery of the front discharge port, a flow of the airflow inside the fan cover. Preferably, with respect to a flow direction of the airflow, the guide protrusion is disposed forward of the front discharge port.

## Description

The present invention relates to a cooking appliance, and more particularly, to a cooking appliance provided with a camera that photographs the inside of a cooking chamber and to a control method thereof.

A cooking appliance is a home appliance installed in a kitchen space to cook food according to a user's intention. Such cooking appliances can be classified in various ways depending on the heat source, the type or form of the appliance, and the kind of fuel used.

When classified according to how food is cooked, cooking appliances may be divided into open-type and closed-type appliances depending on the form of the space on which food is placed. Closed-type appliances include ovens and microwave ovens, and open-type appliances include a cooktop, a hob, and a griddle.

A closed-type cooking appliance shields a space in which food is located and cooks the food by heating the shielded space. The closed-type cooking appliance is provided with a cooking chamber that is the space to be shielded when cooking is to be performed while food is placed therein. The cooking chamber thus becomes the space in which the food is actually cooked.

In a closed-type cooking appliance, a door is provided rotatably to selectively open and close the cooking chamber. The door is rotatably installed at a main body by a door hinge provided between the main body in which the cooking chamber is formed and the door. The door opens and closes the cooking chamber by rotating about a portion coupled to the main body via the door hinge.

A heat source is provided in the internal space of the cooking chamber opened and closed by the door to heat the cooking chamber. As the heat source, a gas burner or an electric heater may be used.

Meanwhile, a convection device may further be provided at a rear side of the cooking chamber. The convection device circulates air inside the cooking chamber so that heat is evenly delivered throughout the cooking chamber. The convection device may include a fan cover installed at a rear wall of the cooking chamber and a convection fan installed in an internal space of the fan cover.

The fan cover may be provided with an intake port and a discharge port. The intake port may be formed at a central portion of a front surface of the fan cover facing the door, and the discharge port may be formed at a side surface of the fan cover facing a side surface of the cooking chamber.

The convection fan may rotate inside the fan cover to generate an airflow. By operation of the convection fan, an air-circulation flow may be generated in which air in the cooking chamber is drawn into the inside of the fan cover through the intake port and heated air inside the fan cover is discharged into the cooking chamber through an exhaust/discharge port.

An object of the present disclosure is to provide a cooking appliance capable of concentrating heat on a target portion among different portions of a food item to be cooked.

To achieve the above object, a cooking appliance according to an embodiment includes a fan cover installed at a cooking chamber and a fan configured to generate an airflow inside the fan cover, wherein the fan cover comprises a front discharge port that forms a passage connecting the inside of the fan cover and the cooking chamber, and a guide protrusion configured to block a flow of airflow around the front discharge port, and Preferably, with respect to a flow direction of airflow in an accommodation space, the guide protrusion is disposed in front of the front discharge port.

In another aspect, the operation of a heating device is controlled so that hot air is directed to a selected region chosen as a result of identifying the state of a food item by divided regions, and Preferably, the operation of the heating device is controlled such that at least one of a discharge position and a reaching distance of a main stream of hot air discharged from the heating device is adjusted.

In one aspect, a cooking appliance may comprise: a main body in which a cooking chamber is formed; a fan installed at the main body and configured to rotate about a rotation axis extending in a front-rear direction to generate an airflow; and a fan cover forming, inside the cooking chamber, an accommodation space that accommodates the fan.

The fan cover may comprise: a front discharge port formed at a front surface of the fan cover to form a passage in the front-rear direction connecting the cooking chamber and the accommodation space; and a guide protrusion protruding from the front surface of the fan cover into the accommodation space and configured to block, around the front discharge port, a flow of airflow formed in the accommodation space along a rotation direction of the fan.

Preferably, with respect to a flow direction of airflow flowing in the accommodation space, the guide protrusion is disposed in front of the front discharge port.

Preferably, a guide protrusion disposed above the rotation axis is disposed above the front discharge port.

Preferably, a guide protrusion disposed below the rotation axis is disposed below the front discharge port.

Preferably, a pair of guide protrusions are arranged in an up-down direction with the rotation axis interposed therebetween.

Preferably, in the up-down direction, the front discharge port is disposed between the pair of guide protrusions.

Preferably, a plurality of front discharge ports are arranged along the rotation direction of the fan.

The guide protrusions may include an upper guide protrusion disposed above the rotation axis and a lower guide protrusion disposed below the rotation axis.

Preferably, the upper guide protrusion is disposed above the front discharge port.

Preferably, the lower guide protrusion is disposed below the front discharge port.

The front discharge port may include an upper front discharge port disposed above the rotation axis and a lower front discharge port disposed below the rotation axis.

The guide protrusions may include an upper guide protrusion disposed adjacent to the upper front discharge port and a lower guide protrusion disposed adjacent to the lower front discharge port.

Preferably, the upper guide protrusion is disposed above the upper front discharge port.

Preferably, the lower guide protrusion is disposed below the lower front discharge port.

The front discharge port may include a first front discharge port and a second front discharge port.

Preferably, on a coordinate plane orthogonal to the rotation axis and having an origin located on the rotation axis, the first front discharge port and the second front discharge port are disposed at different positions.

Preferably, the fan rotates in a forward direction to discharge a main stream of airflow from inside the fan cover into the cooking chamber through the first front discharge port, or rotates in a reverse direction to discharge a main stream of airflow from inside the fan cover into the cooking chamber through the second front discharge port.

The guide protrusions may include a first guide protrusion configured to switch a flow direction of airflow in the accommodation space toward the first front discharge port and a second guide protrusion configured to switch a flow direction of airflow in the accommodation space toward the second front discharge port.

Preferably, the first front discharge port and the second front discharge port are arranged along the rotation direction of the fan.

Preferably, with respect to the forward rotation, the first guide protrusion is disposed forward of a closest one of the first front discharge ports.

Preferably, with respect to the reverse rotation, the second guide protrusion is disposed forward of a closest one of the second front discharge ports.

Preferably, on the coordinate plane, a plurality of the first front discharge ports and a plurality of the second front discharge ports are respectively disposed at different positions.

Preferably, the first front discharge ports and the second front discharge ports are alternately arranged along the rotation direction of the fan.

Preferably, the first guide protrusions and the second guide protrusions are alternately arranged along the rotation direction of the fan.

Preferably, among quadrants of the coordinate plane divided by a front-rear axis and an up-down axis intersecting at the origin, the first front discharge port is disposed in at least one of a second quadrant and a fourth quadrant, and the second front discharge port is disposed in at least one of a first quadrant and a third quadrant.

Preferably, in the first and second quadrants, the first guide protrusion is disposed above the first front discharge port or the second guide protrusion is disposed above the second front discharge port.

Preferably, in the third and fourth quadrants, the first guide protrusion is disposed below the first front discharge port or the second guide protrusion is disposed below the second front discharge port.

The first front discharge port may include a first upper front discharge port disposed in the second quadrant and a first lower front discharge port disposed in the fourth quadrant.

The first guide protrusion may include a first upper guide protrusion disposed above the first upper front discharge port in the second quadrant and a first lower guide protrusion disposed below the first lower front discharge port in the fourth quadrant.

The second front discharge port may include a second upper front discharge port disposed in the first quadrant and a second lower front discharge port disposed in the third quadrant.

The second guide protrusion may include a second upper guide protrusion disposed above the second upper front discharge port in the first quadrant and a second lower guide protrusion disposed below the second lower front discharge port in the third quadrant.

Preferably, the fan is disposed rearward of a front surface of the fan cover, and the guide protrusion forms a lateral plane protruding rearward from the front surface of the fan cover.

Preferably, the guide protrusion is formed by cutting a portion of the front surface of the fan cover and bending the cut portion rearward about an upper or lower edge connected to the front surface of the fan cover.

Preferably, the front discharge port is formed at a portion of the front surface of the fan cover separated by the guide protrusion.

According to the present disclosure, heating can be performed while concentrating heat on a portion of a food item that requires a higher level of heating than other portions, thereby improving uniformity of cooking quality.

In addition, the present disclosure can automatically determine the state of the food item by divided regions and, using the result, concentrate heat on a target portion requiring focused heating, thereby providing an automatic cooking function capable of further improving cooking quality while ensuring uniformity of cooking quality.

Furthermore, since the present disclosure enables a user-desired portion among different portions of the food item to be heated more intensively, more diverse cooking results can be provided according to the user's intention, thereby more effectively improving user satisfaction.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view illustrating a cooking appliance according to an embodiment.
FIG. 2 is a front view showing a state in which a door of the cooking appliance of FIG. 1 is open.
FIG. 3 is a side cross-sectional view showing an internal structure of the cooking appliance of FIG. 1.
FIG. 4 is a side cross-sectional view showing a structure of a convection device illustrated in FIG. 3.
FIG. 5 is a front perspective view of a fan cover separated from FIG. 4.
FIG. 6 is a front perspective view of a fan separated from FIG. 4.
FIG. 7 is a front view of the fan cover separated from FIG. 4.
FIG. 8 is an enlarged side cross-section of a portion "8" of FIG. 7.
FIG. 9 is an enlarged side cross-section of a portion "9" of FIG. 7.
FIG. 10 is an enlarged view of the portion "9" of FIG. 7.
FIG. 11 is a side cross-section of a portion "11" of FIG. 7.
FIG. 12 schematically shows a discharge position of a main stream of hot air during forward rotation of the fan.
FIG. 13 is a side cross-section of a portion "13" of FIG. 12.
FIG. 14 is a side cross-section of a portion "14" of FIG. 12.
FIG. 15 schematically shows a discharge position of a main stream of hot air during reverse rotation of the fan.
FIG. 16 is a side cross-section of a portion "16" of FIG. 15.
FIG. 17 is a side cross-section of a portion "17" of FIG. 15.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, *all modifications, equivalents or replacements as well as a replacement of the configuration of any one embodiment with the configuration of another embodiment or an addition of the configuration of any one embodiment to the configuration of another embodiment, within* the technical spirit and scope of the disclosure, *are to be included in* the scope of the disclosure.

The accompanying drawings are provided for a better understanding of the embodiments set forth herein and are not intended to limit the technical spirit of the disclosure. It is to be understood that *all the modifications, equivalents or replacements within* the spirit and technical scope of the disclosure *are included in* the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Overall Structure of the Cooking Appliance]

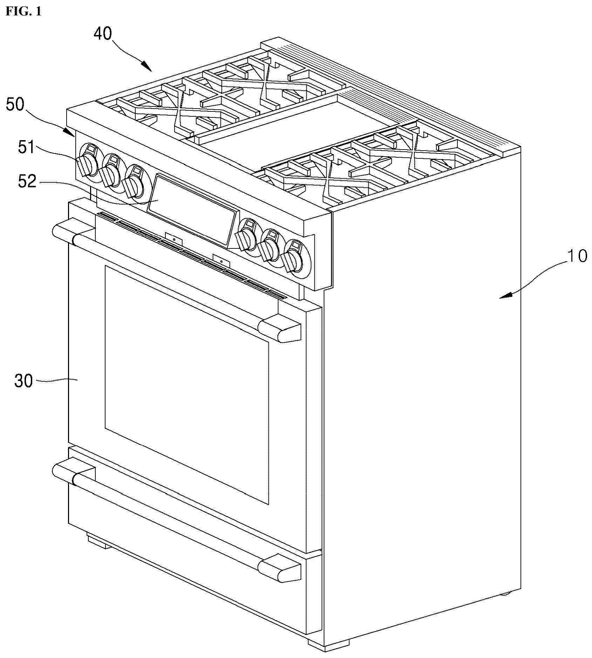

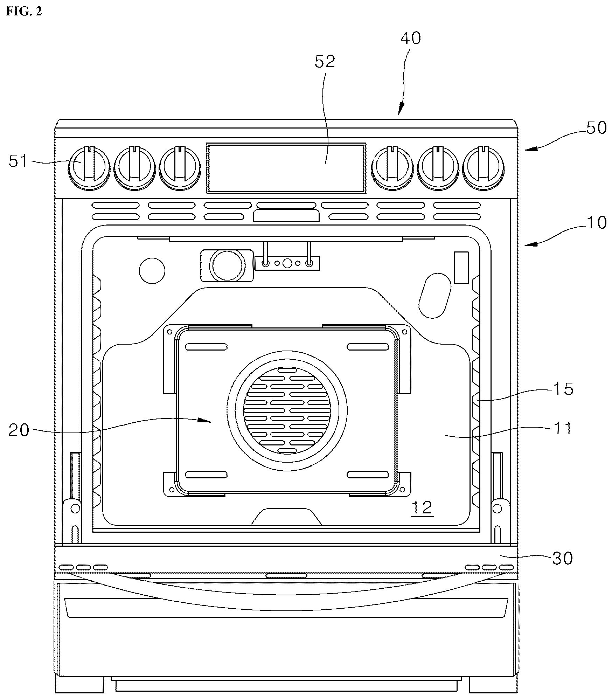

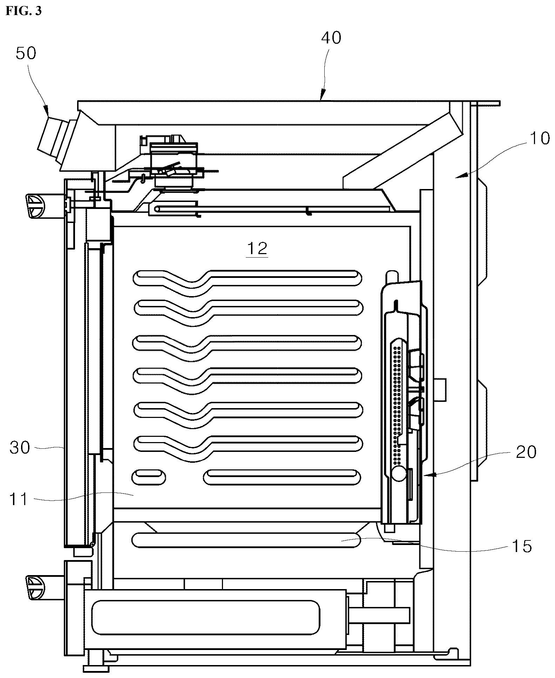

FIG. 1 is a perspective view of a cooking appliance according to an embodiment; FIG. 2 is a side cross-sectional view showing an internal structure of the cooking appliance of FIG. 1; and FIG. 3 is a front view showing a state in which the door of the cooking appliance of FIG. 1 is open.

Referring to FIGS. 1 to 3, an exterior of the cooking appliance may be formed by a main body 10. The main body 10 may be provided in a form including a substantially rectangular parallelepiped and may be formed of a material having a predetermined strength to protect a plurality of components installed in an internal space thereof.

The main body 10 includes a cavity 11 that forms a framework of the main body 10. The cavity 11 may be formed as a hexahedron having an open front, and a cooking chamber 12 is provided inside the cavity 11.

The cavity 11 may be formed as a hexahedron having an open front, and the cooking chamber 12 may be formed inside the cavity 11. That is, the cooking chamber 12 may be formed as a substantially hexahedral space disposed inside the cavity 11 and opened toward the front.

In a state where the cooking chamber 12 is closed, the inside of the cooking chamber 12 is heated and food cooking may be performed. Thus, in the closed-type cooking appliance according to this embodiment, the cooking chamber 12 is the space in which food is substantially cooked.

A heating device for heating the cooking chamber 12 is provided in the cooking appliance. The heating device may be provided as a burner using gas fuel or as a heater using electricity. The structure of the heating device may vary depending on the kind of heat source used.

For example, the heating device may include a convection device 20 disposed at a rear side of the cooking chamber 12. The convection device 20 draws air inside the cooking chamber 12, heats the air, and discharges it back into the cooking chamber 12 to circulate the air, thereby enabling the internal space of the cooking chamber 12 to be heated uniformly.

The heating device may further include a broil burner or a grill heater. The broil burner or the grill heater may be disposed above the cooking chamber 12 to heat the internal space of the cooking chamber 12 from above.

A door 30 may be provided rotatably to selectively open and close the cooking chamber 12. For example, the door 30 may be provided in a pull-down type in which an upper end rotates up and down about a lower end to open and close the cooking chamber 12.

A cooktop 40 may be disposed at an upper side of the main body 10 to heat food or a container containing food. The cooktop 40 may be provided with a top plate that forms an upper exterior and closes an upper end of the main body 10.

At a central portion of the cooktop 40, at least one heating unit may be provided to heat food or a container containing food. For example, the heating unit may be provided as a heating device using gas fuel.

In another example, the heating unit may be provided as an induction heater using electricity. The structure of the heating unit may vary depending on the kind of heat source used.

At an upper front portion of the cooking appliance, i.e., at an upper front portion of the cavity 11, a control panel 50 may be provided. The control panel 50 may form a portion of a front exterior of the cooking appliance. The control panel 50 may be provided with knobs 51 for controlling operation of the cooking appliance and a display 52 for indicating an operating state.

In an internal space of the main body 10, i.e., in a space between the cooktop 40 and the cooking chamber 12, an electrical compartment 60 may be provided to house electrical components. The electrical compartment 60 may be a space formed between the cooktop 40 and the cooking chamber 12, or may be a concept including both the space formed between the cooktop 40 and the cooking chamber 12 and a space inside the cooktop 40. A front side of the electrical compartment 60 may be shielded by the control panel 50 or, as illustrated in this embodiment, may be shielded by the door 30.

### [Convection Device]

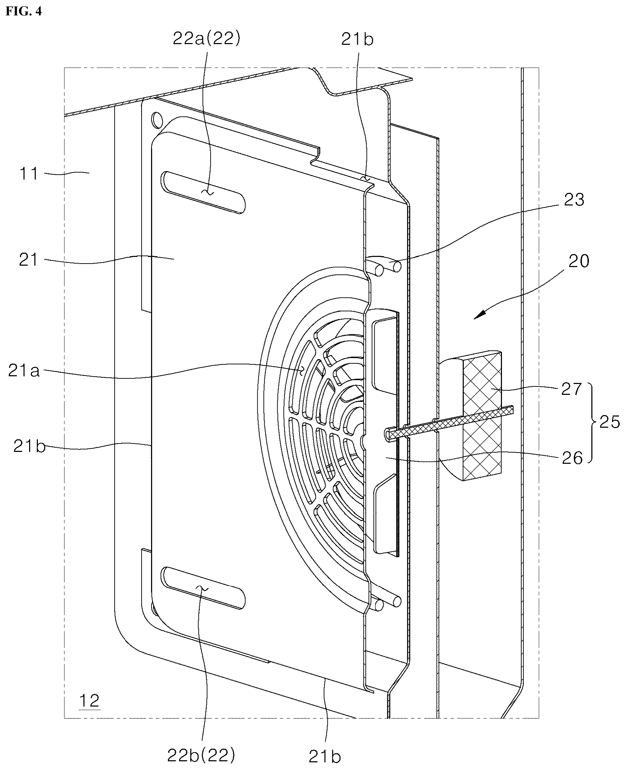

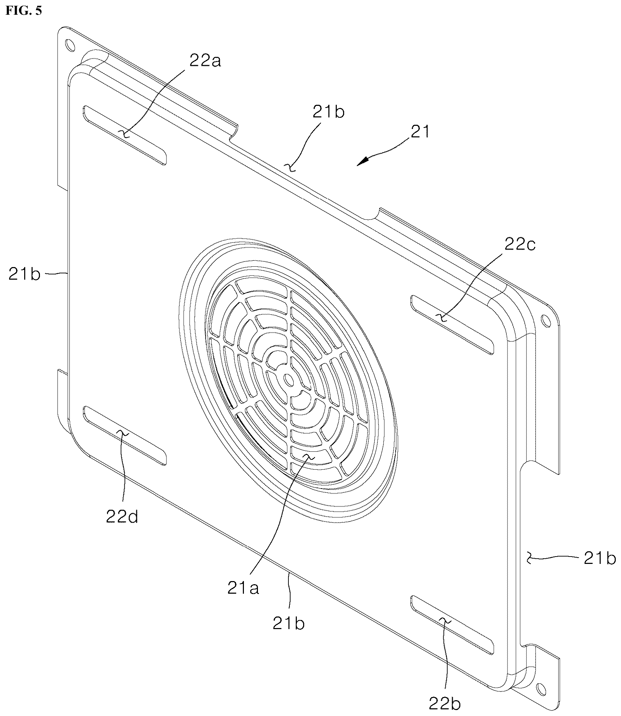

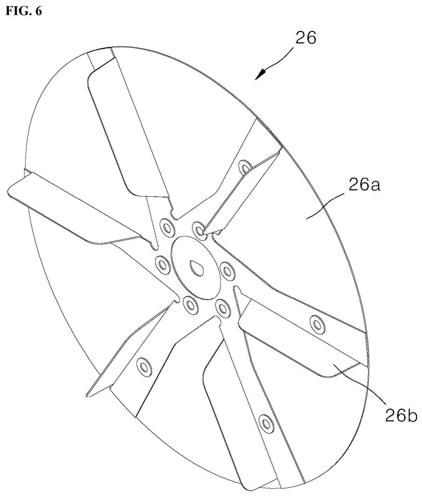

FIG. 4 is a side cross-sectional view showing the structure of the convection device of FIG. 3; FIG. 5 is a front perspective view of a fan cover separated from FIG. 4; and FIG. 6 is a front view of a fan separated from FIG. 4.

As shown in FIGS. 3 and 4, a heating device is provided in this embodiment and may include the convection device 20. For example, the convection device 20 may include the fan cover 21, a heating unit 23, and a fan module 25.

The fan cover 21 is disposed at a rear portion of the cooking chamber 12 and may be installed at a rear surface of the cavity 11. The fan cover 21 may form, inside the cooking chamber 12, an accommodation space that is separated from the cooking chamber 12. The accommodation space is a space formed inside the fan cover 21 to accommodate the fan module 25, and the fan module 25 accommodated in the accommodation space may be disposed in a space separated from the cooking chamber 12.

For example, the fan cover 21 may be formed in a hexahedral shape whose front surface faces the door 30 and whose side surface faces a side surface of the cavity 11. An intake port 21a is disposed at a central portion of the front surface of the fan cover 21, and air inside the cooking chamber 12 may be introduced into an internal space of the convection device 20 through the intake port 21a.

In the internal space of the convection device 20 formed by the fan cover 21, i.e., in the accommodation space, the heating unit 23 and the fan module 25 may be disposed. The heating unit 23 is provided to heat air introduced into the internal space of the convection device 20. The heating unit 23 may be a burner using gas fuel or a heater using electricity.

Air heated by the heating unit 23 in the internal space of the convection device 20 may be discharged into the cooking chamber 12 by the fan module 25. That is, hot air is generated in the internal space of the convection device 20 by the heating unit 23 and the fan module 25, and the hot air may be discharged into the cooking chamber 12 through a discharge port 21b.

As shown in FIGS. 3 to 5, the discharge port 21b may be provided at the fan cover 21. The discharge port 21b may be disposed at at least one of a side surface, an upper surface, and a lower surface of the fan cover 21. In this embodiment, discharge ports 21b are exemplarily disposed at both side surfaces, the upper surface, and the lower surface of the fan cover 21, respectively.

Each discharge port 21b may be formed to penetrate the side, upper, or lower surface of the fan cover 21. Hot air generated inside the convection device 20 may be discharged into the cooking chamber 12 through the discharge port 21b.

The fan module 25 is disposed in the internal space of the convection device 20 surrounded by the fan cover 21 and is provided to rotate about a front-rear rotation axis. A rotation axis of the fan module 25 may be disposed at a position overlapping the intake port 21a, which is disposed substantially at the center of the fan cover 21, in the front-rear direction.

The fan module 25 may draw air in the cooking chamber 12 into the internal space of the convection device 20 through the intake port 21a and discharge air heated in the internal space of the convection device 20 into the cooking chamber 12 through the discharge port 21b.

For example, the fan module 25 may generate a flow of hot air that moves rearward from the cooking chamber 12 toward the internal space of the convection device 20 and then moves radially in the internal space of the convection device 20. The fan module 25 may include a fan 26 and a fan motor 27.

As shown in FIGS. 4 and 6, the fan 26 is provided to rotate about the front-rear rotation axis to generate hot air. For example, the fan 26 may include a rotating plate 26a and blades 26b.

The rotating plate 26a may be coupled to a rotation shaft rotated by the fan motor 27 and may rotate about the rotation shaft. For example, the rotating plate 26a may be formed as a disk to which the rotation shaft is coupled at a center.

The blades 26b may be formed to protrude forward from the rotating plate 26a. For example, a plurality of blades 26b may be arranged radially about the rotation axis, and the blades 26b rotate together with the rotating plate 26a.

The fan module 25 is provided to enable control of a rotation direction of the fan 26. The fan module 25 may rotate the fan 26 in both directions about the front-rear axis. For example, the fan module 25 may rotate the fan 26 in a forward direction or in a reverse direction as needed.

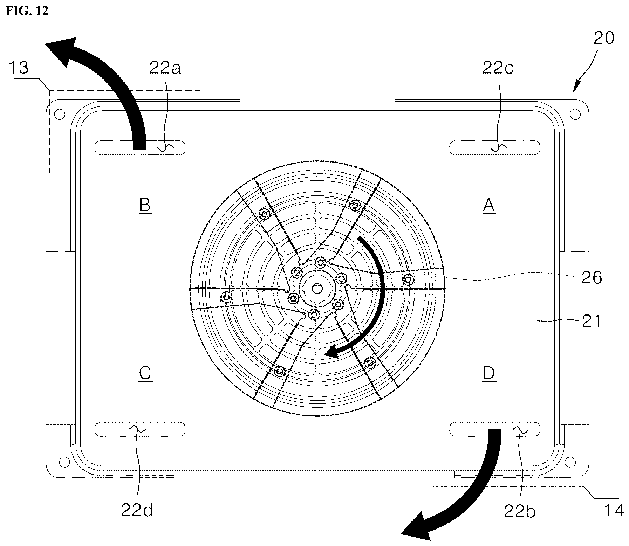

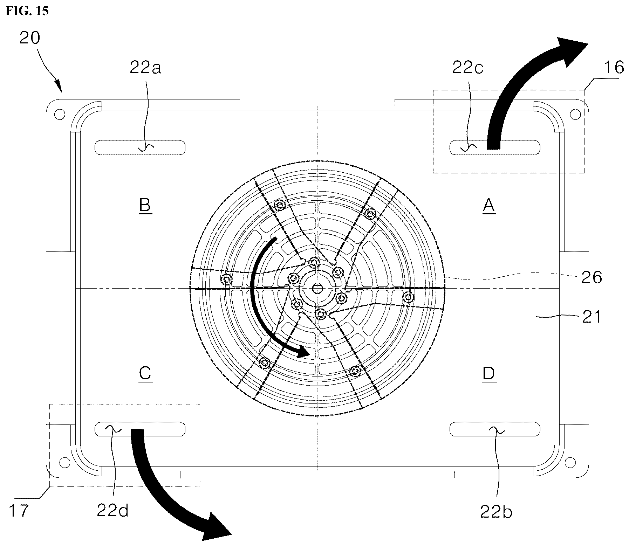

According to this embodiment, when the fan module 25 rotates the fan 26 in the forward direction, the fan 26 blows hot air in a direction between the forward direction and a centrifugal direction (see FIG. 12). When the fan module 25 rotates the fan 26 in the reverse direction, the fan 26 blows hot air in a direction between the reverse direction and the centrifugal direction (see FIG. 15).

The fan module 25 may also be provided to allow control of a rotation speed of the fan 26. The rotation speed of the fan 26 may affect a travel distance of hot air discharged from the internal space of the convection device 20 into the cooking chamber 12. For example, as the rotation speed of the fan 26 increases, the hot air can travel farther forward; as the rotation speed decreases, the hot air travels a shorter distance forward.

As shown in FIGS. 4 and 5, the fan cover 21 may further include a front discharge port 22. The front discharge port 22 may be disposed at the front surface of the fan cover 21. The front discharge port 22 may form, at the front surface of the fan cover 21, a passage in the front-rear direction that connects the cooking chamber 12 and the accommodation space.

For example, the intake port 21a may be disposed at the center of the front surface of the fan cover 21, and a plurality of front discharge ports 22 may be disposed to surround the intake port 21a. Each front discharge port 22 may be formed to penetrate the front surface of the fan cover 21 in the front-rear direction.

### [Front Discharge Port and Guide Protrusion]

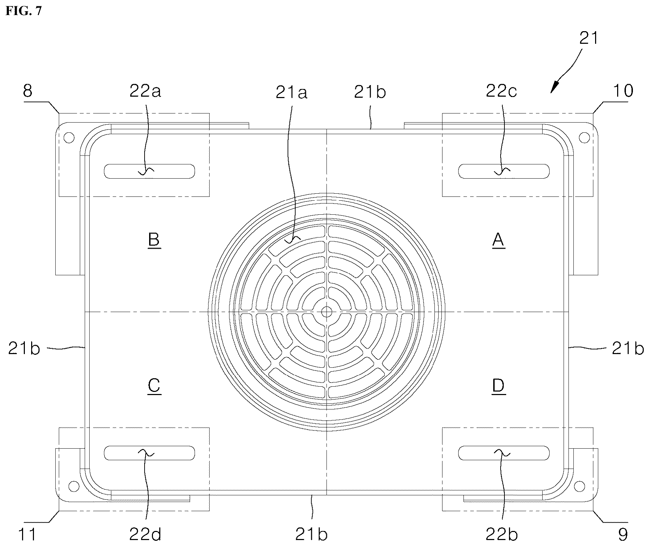

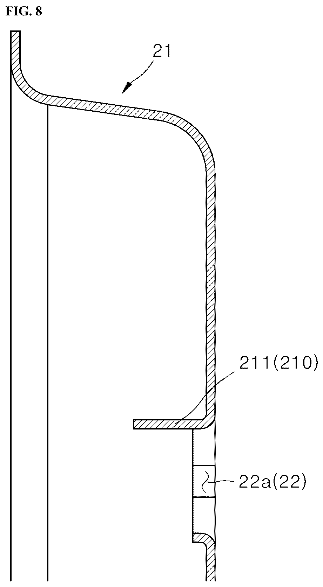

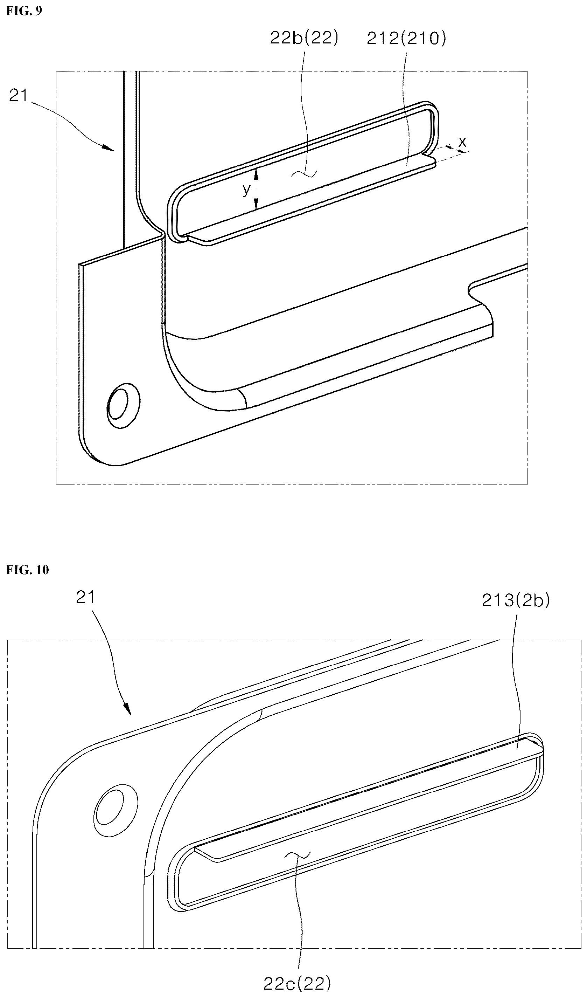

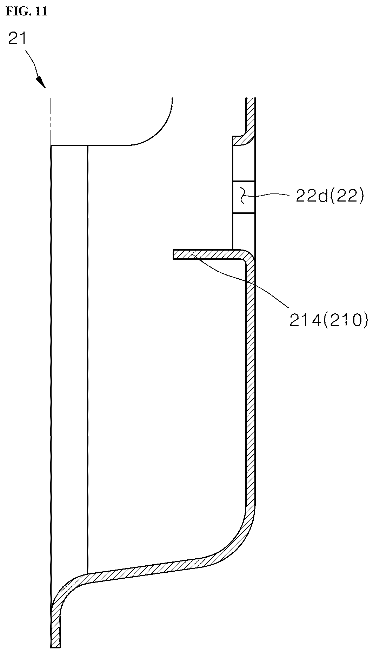

FIG. 7 is a front view of the fan cover separated from FIG. 4; FIG. 8 is an enlarged rear view of a portion "8" of FIG. 7; FIG. 9 is an enlarged view of a portion "9" of FIG. 7; FIG. 10 is a side cross-section of a portion "10" of FIG. 7; and FIG. 11 is a side cross-section of a portion "11" of FIG. 7.

Referring to FIG. 7, the front discharge port 22 may include first front discharge ports 22a, 22b and second front discharge ports 22c, 22d. The first front discharge ports 22a, 22b and the second front discharge ports 22c, 22d are disposed at the front surface of the fan cover 21 at different positions.

For example, on a coordinate plane parallel to the front surface of the fan cover 21, the first front discharge ports 22a, 22b and the second front discharge ports 22c, 22d may be disposed at different positions. The coordinate plane may be a plane orthogonal to a rotation axis of the fan module 25, and an origin of the coordinate plane may be located on the rotation axis of the fan module 25.

The coordinate plane may be divided into quadrants by a front-rear axis and an up-down axis intersecting at the origin. For example, the quadrants A (first), B (second), C (third), and D (fourth) may be arranged clockwise, and the first quadrant A may be disposed to the right and above with respect to the origin.

For example, the first front discharge ports 22a, 22b may be disposed at the front surface of the fan cover 21 in at least one of the second quadrant B and the fourth quadrant D, and the second front discharge ports 22c, 22d may be disposed at the front surface of the fan cover 21 in at least one of the first quadrant A and the third quadrant C.

The front discharge port 22 may include upper front discharge ports 22a, 22c and lower front discharge ports 22b, 22d. The upper and lower front discharge ports are disposed at different positions on the front surface of the fan cover 21.

In this embodiment, the upper front discharge ports 22a, 22c may be disposed above the rotation axis of the fan module 25, and the lower front discharge ports 22b, 22d may be disposed below the rotation axis of the fan module 25.

For example, the upper front discharge ports 22a, 22c may be disposed in at least one of the first quadrant A and the second quadrant B, and the lower front discharge ports 22b, 22d may be disposed in at least one of the third quadrant C and the fourth quadrant D.

In this embodiment, the first front discharge ports 22a, 22b are respectively disposed in the second quadrant B and the fourth quadrant D, and the second front discharge ports 22c, 22d are respectively disposed in the first quadrant A and the third quadrant C. Also, the upper front discharge ports 22a, 22c are respectively disposed in the first quadrant A and the second quadrant B, and the lower front discharge ports 22b, 22d are respectively disposed in the third quadrant C and the fourth quadrant D.

Hereinafter, a first front discharge port that is also an upper front discharge port is referred to as a first upper front discharge port 22a; a first front discharge port that is also a lower front discharge port is referred to as a first lower front discharge port 22b; a second front discharge port that is also an upper front discharge port is referred to as a second upper front discharge port 22c; and a second front discharge port that is also a lower front discharge port is referred to as a second lower front discharge port 22d.

According to this embodiment, a plurality of front discharge ports 22 may be arranged along the rotation direction of the fan 26. On the coordinate plane, the first upper front discharge port 22a may be disposed in the second quadrant B, the first lower front discharge port 22b may be disposed in the fourth quadrant D, the second upper front discharge port 22c may be disposed in the first quadrant A, and the second lower front discharge port 22d may be disposed in the third quadrant C.

Meanwhile, as shown in FIGS. 8 to 11, the fan cover 21 may further include guide protrusions 210. The guide protrusions 210 may protrude from the front surface of the fan cover 21 into the accommodation space. For example, the guide protrusions 210 may protrude rearward from the front surface of the fan cover 21.

The guide protrusions 210 are provided to block, around the front discharge port 22, a flow of airflow formed in the accommodation space along the rotation direction of the fan 26. The guide protrusions 210 can function to switch a flow direction of airflow in the accommodation space toward a direction passing through the front discharge port 22.

Referring to FIGS. 8 and 9, the guide protrusions 210 may include first guide protrusions 211, 212. The first guide protrusions 211, 212 may be disposed adjacent to the first front discharge ports 22a, 22b.

The first guide protrusions 211, 212 can act to switch a flow direction of airflow generated by the fan module 25, i.e., airflow flowing in the accommodation space, toward a direction passing through the first front discharge ports 22a, 22b. For example, the first guide protrusions 211, 212 may be disposed at an upper end or a lower end of the first front discharge ports 22a, 22b.

Referring to FIGS. 10 and 11, the guide protrusions 210 may include second guide protrusions 213, 214. The second guide protrusions 213, 214 may be disposed adjacent to the second front discharge ports 22c, 22d.

The second guide protrusions 213, 214 can act to switch a flow direction of airflow generated by the fan module 25, i.e., airflow flowing in the accommodation space, toward a direction passing through the second front discharge ports 22c, 22d. For example, the second guide protrusions 213, 214 may be disposed at an upper end or a lower end of the second front discharge ports 22c, 22d.

In the first and second quadrants A and B, the first guide protrusions 211, 212 may be disposed above the first front discharge ports 22a, 22b or the second guide protrusions 213, 214 may be disposed above the second front discharge ports 22c, 22d. In the third and fourth quadrants C and D, the first guide protrusions 211, 212 may be disposed below the first front discharge ports 22a, 22b or the second guide protrusions 213, 214 may be disposed below the second front discharge ports 22c, 22d.

In this embodiment, in the first and second quadrants A and B, the guide protrusions 210 are respectively disposed above the front discharge ports 22, and in the third and fourth quadrants C and D, the guide protrusions 210 are respectively disposed below the front discharge ports 22.

As shown in FIGS. 8 and 10, the guide protrusions 210 may include upper guide protrusions 211, 213. The upper guide protrusions 211, 213 are disposed adjacent to the front discharge ports 22 and are disposed above the front discharge ports 22. For example, the upper guide protrusions 211, 213 may be respectively disposed adjacent to the upper front discharge ports 22a, 22c and at upper ends of the upper front discharge ports 22a, 22c.

As shown in FIGS. 9 and 11, the guide protrusions 210 may include lower guide protrusions 212, 214. The lower guide protrusions 212, 214 are disposed adjacent to the front discharge ports 22 and are disposed below the front discharge ports 22. For example, the lower guide protrusions 212, 214 may be respectively disposed adjacent to the lower front discharge ports 22b, 22d and at lower ends of the lower front discharge ports 22b, 22d.

According to this embodiment, a pair of guide protrusions 210 may be arranged in the up-down direction with the rotation axis of the fan module 25 interposed therebetween. For example, as shown in FIGS. 9 and 10, the first lower guide protrusion 212 and the second upper guide protrusion 213 may be spaced apart in the up-down direction with the rotation axis of the fan module 25 interposed therebetween.

In the up-down direction, the front discharge port 22 may be disposed between the pair of guide protrusions 210. For example, the first lower front discharge port 22b and the second upper front discharge port 22c may be disposed between the first lower guide protrusion 212 and the second upper guide protrusion 213.

In this embodiment, the first guide protrusions 211, 212 are respectively disposed in the second and fourth quadrants B and D (see FIGS. 8 and 9), and the second guide protrusions 213, 214 are respectively disposed in the first and third quadrants A and C (see FIGS. 10 and 11). Also, the upper guide protrusions 211, 213 are respectively disposed in the first and second quadrants A and B (see FIGS. 8 and 10), and the lower guide protrusions 212, 214 are respectively disposed in the third and fourth quadrants C and D (see FIGS. 9 and 11).

Hereinafter, a first guide protrusion that is also an upper guide protrusion is referred to as a first upper guide protrusion 211; a first guide protrusion that is also a lower guide protrusion is referred to as a first lower guide protrusion 212; a second guide protrusion that is also an upper guide protrusion is referred to as a second upper guide protrusion 213; and a second guide protrusion that is also a lower guide protrusion is referred to as a second lower guide protrusion 214.

For example, as shown in FIGS. 7 to 11, the first upper guide protrusion 211 is disposed above the first upper front discharge port 22a in the second quadrant B, and the first lower guide protrusion 212 may be disposed below the first lower front discharge port 22b in the fourth quadrant D. The second upper guide protrusion 213 is disposed above the second upper front discharge port 22c in the first quadrant A, and the second lower guide protrusion 214 may be disposed below the second lower front discharge port 22d in the third quadrant C.

According to this embodiment, the fan module 25 is disposed at a rear side of the front surface. Each guide protrusion 210 may form a lateral plane protruding rearward from the front surface of the fan cover 21. For example, each guide protrusion 210 may be formed to define a plane orthogonal to an up-down axis.

In this embodiment, the guide protrusions 210 are exemplarily formed by cutting a portion of the front surface of the fan cover 21. After a portion of the front surface of the fan cover 21 is cut, the cut portion is bent forward about an upper edge connected to the front surface of the fan cover 21, thereby forming the guide protrusion 210. The front discharge port 22 may be formed at a portion separated by the guide protrusion 210 on the front surface of the fan cover 21.

Accordingly, with only a simple operation of cutting and bending a portion of the fan cover 21 without adding additional structures, both a passage for discharging hot air generated in the convection device 20 into the cooking chamber 12 and a structure for guiding a flow of hot air toward the passage can be formed at once. Thus, the cooking appliance of this embodiment can provide improved heating performance while effectively suppressing increases in cost and time required for manufacturing the convection device.

According to this embodiment, a protrusion length x of the guide protrusion 210 may be set to a range of 50% to 70% relative to an up-down width y of the front discharge port 22. When the protrusion length x of the guide protrusion 210 is set in this manner, switching of a flow direction of airflow flowing in the accommodation space can be effectively guided by the guide protrusion 210.

If the protrusion length x of the guide protrusion 210 is less than 50% relative to the up-down width y of the front discharge port 22, it becomes difficult for the guide protrusion 210 to properly block the flow of airflow around the front discharge port 22. Consequently, the function of the guide protrusion 210 to switch the flow direction of airflow in the accommodation space toward a direction passing through the front discharge port 22 is hindered.

If the protrusion length x of the guide protrusion 210 exceeds 70% relative to the up-down width y of the front discharge port 22, the flow-guiding effect by the guide protrusion 210 changes little, while only flow resistance in the accommodation space increases. That is, due to increased flow resistance, a discharge flow rate of the convection device 20 decreases, and discharge of hot air through the front discharge port 22 may not be properly achieved.

If the protrusion length x of the guide protrusion 210 exceeds 70% relative to the up-down width y of the front discharge port 22, a front-rear length of the convection device 20 may unnecessarily increase to maintain a gap between the fan cover 21 and the fan 26 or between the fan cover 21 and the heating unit 23, or it may be difficult to form the guide protrusion 210 by cutting and bending a portion of the fan cover 21.

### [Operation and Effects of the Convection Device]

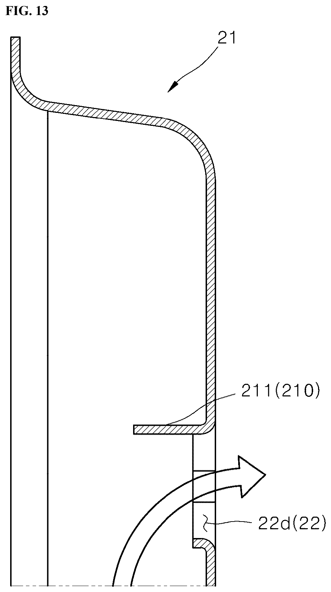

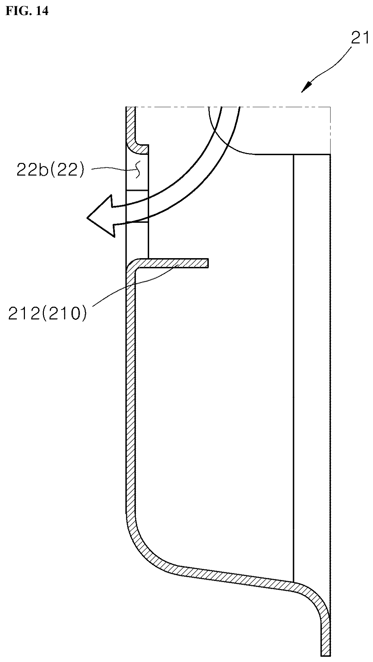

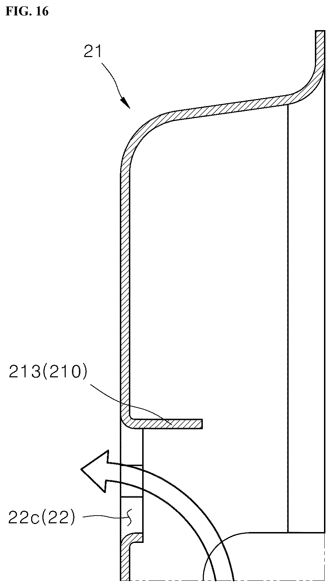

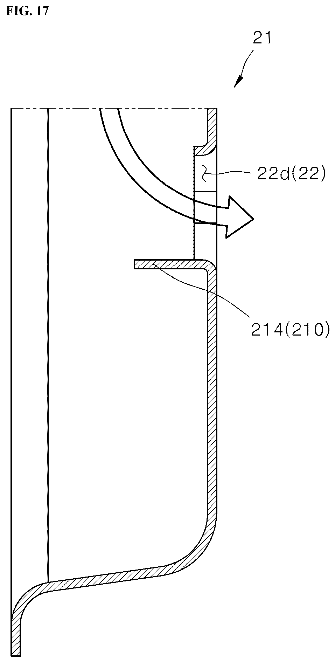

FIG. 12 schematically shows a discharge position of a main stream of hot air during forward rotation of the fan; FIG. 13 is a side cross-section of a portion "13" of FIG. 12; FIG. 14 is a side cross-section of a portion "14" of FIG. 12. FIG. 15 schematically shows a discharge position of a main stream of hot air during reverse rotation of the fan; FIG. 16 is a side cross-section of a portion "16" of FIG. 15; and FIG. 17 is a side cross-section of a portion "17" of FIG. 15.

Hereinafter, with reference to FIGS. 4 and 12 to 17, operation and effects of the cooking appliance according to an embodiment will be described.

Referring to FIG. 4, during operation of the convection device 20, an airflow may be generated by operation of the fan module 25 in which air in the cooking chamber 12 is introduced into the accommodation space through the intake port 21a and air in the accommodation space is discharged into the cooking chamber 12 through the discharge port 21b and the front discharge port 22. The air introduced into the accommodation space may be heated by the heating unit 23, and the hot air generated in the internal space of the convection device 20 may be discharged back into the cooking chamber 12 through the discharge port 21b and the front discharge port 22.

The fan module 25 is provided to rotate in both directions. A forwardly rotating fan module 25 blows hot air in a direction between the forward direction and the centrifugal direction, and a reversely rotating fan module 25 blows hot air in a direction between the reverse direction and the centrifugal direction.

Referring to FIGS. 4 and 12, a main stream of hot air generated by the forwardly rotating fan 26 tends to be concentrated in the second quadrant B and the fourth quadrant D of the fan cover 21. The second and fourth quadrants B and D of the fan cover 21 are provided with the first front discharge ports 22a and 22b, respectively. As shown in FIGS. 12 to 14, the first guide protrusions 211 and 212 are also provided in the second and fourth quadrants B and D, respectively.

Referring to FIGS. 12 and 13, the first upper guide protrusion 211 is disposed above the first upper front discharge port 22a. When the fan 26 rotates in the forward direction, airflow formed in the accommodation space by rotation of the fan 26 flows generally upward around the first upper front discharge port 22a.

For example, around the first upper front discharge port 22a, a main stream of hot air passes upward through the first upper front discharge port 22a and then flows toward a direction facing the first upper guide protrusion 211. That is, with respect to the flow direction of airflow flowing in the accommodation space, the first upper guide protrusion 211 may be disposed forward of the closest first upper front discharge port 22a.

The first upper guide protrusion 211 arranged in this manner serves as a structure that blocks downward movement of airflow passing the vicinity of the first upper front discharge port 22a and can guide a flow direction of the blocked airflow forward. Thus, the first upper guide protrusion 211 can switch a flow direction of airflow in the accommodation space toward a direction passing through the first upper front discharge port 22a.

Accordingly, the fan 26 rotates in the forward direction to generate hot air, and a main stream of airflow generated in the accommodation space can be discharged into the cooking chamber 12 through the first upper front discharge port 22a. The hot air discharged through the first upper front discharge port 22a flows toward a region biased to an upper-left area in the cooking chamber 12.

In addition, as shown in FIGS. 12 and 14, airflow formed in the accommodation space by the forward rotation of the fan 26 flows generally downward around the first lower front discharge port 22b.

For example, around the first lower front discharge port 22b, a main stream of hot air passes downward through the first lower front discharge port 22b and then flows toward a direction facing the first lower guide protrusion 212. That is, with respect to the flow direction of airflow flowing in the accommodation space, the first lower guide protrusion 212 may be disposed forward of the closest first lower front discharge port 22b.

The first lower guide protrusion 212 arranged in this manner serves as a structure that blocks downward movement of airflow passing the vicinity of the first lower front discharge port 22b and can guide a flow direction of the blocked airflow forward. Thus, the first lower guide protrusion 212 can switch a flow direction of airflow in the accommodation space toward a direction passing through the first lower front discharge port 22b.

Accordingly, the fan 26 rotates in the forward direction to generate hot air, and a main stream of airflow generated in the accommodation space can be discharged into the cooking chamber 12 through the first lower front discharge port 22b. The hot air discharged through the first lower front discharge port 22b flows toward a region biased to a lower-right area in the cooking chamber 12.

As described above, the main stream of hot air generated by the forwardly rotating fan 26 is discharged into the cooking chamber 12 through the first front discharge ports 22a, 22b and flows toward a region biased to the upper-left area and a region biased to the lower-right area of the cooking chamber 12.

As a result, heating can be concentrated on portions of a food item located in a region biased to the upper-left area and a region biased to the lower-right area in the cooking chamber 12, and the heating device can concentrate heat on a target portion among different portions of the food item.

Referring to FIGS. 4 and 15, a main stream of hot air generated by the reversely rotating fan module 25 tends to be concentrated in the first and third quadrants A and C of the fan cover 21. The first and third quadrants A and C of the fan cover 21 are provided with the second front discharge ports 22c and 22d, respectively, and, as shown in FIGS. 15 to 17, the second guide protrusions 213 and 214 are respectively provided there.

Referring to FIGS. 15 and 16, the second upper guide protrusion 213 is disposed above the second upper front discharge port 22c. When the fan 26 rotates in the reverse direction, airflow formed in the accommodation space by rotation of the fan 26 flows generally upward around the second upper front discharge port 22c.

For example, around the second upper front discharge port 22c, a main stream of hot air passes upward through the second upper front discharge port 22c and then flows toward a direction facing the second upper guide protrusion 213. That is, with respect to the flow direction of airflow flowing in the accommodation space, the second upper guide protrusion 213 may be disposed forward of the closest second upper front discharge port 22c.

The second upper guide protrusion 213 arranged in this manner serves as a structure that blocks downward movement of airflow passing the vicinity of the second upper front discharge port 22c and can guide a flow direction of the blocked airflow forward. Thus, the second upper guide protrusion 213 can switch a flow direction of airflow in the accommodation space toward a direction passing through the second upper front discharge port 22c.

Accordingly, the fan 26 rotates in the reverse direction to generate hot air, and a main stream of airflow generated in the accommodation space can be discharged into the cooking chamber 12 through the second upper front discharge port 22c. The hot air discharged through the second upper front discharge port 22c flows toward a region biased to an upper-right area in the cooking chamber 12.

In addition, as shown in FIGS. 15 and 17, airflow formed in the accommodation space by the reverse rotation of the fan 26 flows generally downward around the second lower front discharge port 22d.

For example, around the second lower front discharge port 22d, a main stream of hot air passes downward through the second lower front discharge port 22d and then flows toward a direction facing the second lower guide protrusion 214. That is, with respect to the flow direction of airflow flowing in the accommodation space, the second lower guide protrusion 214 may be disposed forward of the closest second lower front discharge port 22d.

The second lower guide protrusion 214 arranged in this manner serves as a structure that blocks downward movement of airflow passing the vicinity of the second lower front discharge port 22d and can guide a flow direction of the blocked airflow forward. Thus, the second lower guide protrusion 214 can switch a flow direction of airflow in the accommodation space toward a direction passing through the second lower front discharge port 22d.

Accordingly, the fan 26 rotates in the reverse direction to generate hot air, and a main stream of airflow generated in the accommodation space can be discharged into the cooking chamber 12 through the second lower front discharge port 22d. The hot air discharged through the second lower front discharge port 22d flows toward a region biased to a lower-left area in the cooking chamber 12.

As described above, the main stream of hot air generated by the reversely rotating fan 26 is discharged into the cooking chamber 12 through the second front discharge ports 22c, 22d and flows toward a region biased to the upper-right area and a region biased to the lower-left area of the cooking chamber 12.

As a result, heating can be concentrated on portions of a food item located in a region biased to the upper-right area and a region biased to the lower-left area in the cooking chamber 12, and the heating device can concentrate heat on a target portion among different portions of the food item.

As described above, the cooking appliance of this embodiment can perform heating while concentrating heat on a portion requiring a higher level of heating than other portions, and can evenly heat an entire area of a food item even when the food item is spread widely or is large in size.

That is, by performing heating while concentrating heat on a portion requiring a higher level of heating than other portions, the cooking appliance of this embodiment can improve uniformity of cooking quality.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

10: main body
11: cavity
12: cooking chamber
20: convection device
21: fan cover
21a: intake port
21b: discharge port
22: front discharge port
22a: first upper front discharge port
22b: first lower front discharge port
22c: second upper front discharge port
22d: second lower front discharge port
23: heating unit
25: fan module
30: door
40: cooktop
50: control panel
60: electrical compartment
210: guide protrusion
211: first upper guide protrusion
212: first lower guide protrusion
213: second upper guide protrusion
214: second lower guide protrusion

## Claims

1. A cooking appliance comprising:
a main body having a cooking chamber;
a fan disposed at the main body and configured to rotate about a rotation axis extending in a front-rear direction to generate an airflow; and
a fan cover forming, inside the cooking chamber, an accommodation space that accommodates the fan,
wherein the fan cover comprises:
a front discharge port formed on a front surface of the fan cover to define a passage extending in the front-rear direction and connecting the cooking chamber and the accommodation space; and
a guide protrusion protruding from the front surface of the fan cover into the accommodation space and configured to block, at a periphery of the front discharge port, a flow of the airflow inside the accommodation space along a rotation direction of the fan,
wherein, with respect to a flow direction of the airflow flowing in the accommodation space, the guide protrusion is disposed forward of the front discharge port.

2. The cooking appliance of claim 1 or 2, wherein:
a pair of the guide protrusions are arranged in an up-down direction with the rotation axis interposed therebetween, and
the front discharge port is disposed between the pair of guide protrusions in the up-down direction.

3. The cooking appliance of claim 1, wherein:
the guide protrusion disposed above the rotation axis is disposed above the front discharge port, and
the guide protrusion disposed below the rotation axis is disposed below the front discharge port.

4. The cooking appliance of one of claims 1 to 3, wherein:
a plurality of the front discharge ports are arranged along the rotation direction of the fan,
the guide protrusions comprise an upper guide protrusion disposed above the rotation axis and a lower guide protrusion disposed below the rotation axis,
the upper guide protrusion is disposed above the front discharge port, and
the lower guide protrusion is disposed below the front discharge port.

5. The cooking appliance of claim 1, wherein:
the front discharge port comprises an upper front discharge port disposed above the rotation axis and a lower front discharge port disposed below the rotation axis,
the guide protrusions comprise an upper guide protrusion disposed adjacent to the upper front discharge port and a lower guide protrusion disposed adjacent to the lower front discharge port,
the upper guide protrusion is disposed above the upper front discharge port, and
the lower guide protrusion is disposed below the lower front discharge port.

6. The cooking appliance of one of claims 1 to 5, wherein:
the front discharge port comprises a first front discharge port and a second front discharge port,
on a coordinate plane orthogonal to the rotation axis and having an origin located on the rotation axis, the first front discharge port and the second front discharge port are disposed at different positions,
the fan rotates in a forward direction to discharge a main stream of airflow from inside the accommodation space into the cooking chamber through the first front discharge port, or rotates in a reverse direction to discharge a main stream of airflow from inside the accommodation space into the cooking chamber through the second front discharge port, and
the guide protrusions comprise a first guide protrusion configured to switch a flow direction of airflow in the accommodation space toward the first front discharge port, and a second guide protrusion configured to switch a flow direction of airflow in the accommodation space toward the second front discharge port.

7. The cooking appliance of claim 6, wherein:
the first front discharge port and the second front discharge port are arranged along the rotation direction of the fan,
the first guide protrusion is disposed forward of the closest first front discharge port with respect to the forward rotation, and
the second guide protrusion is disposed forward of the closest second front discharge port with respect to the reverse rotation.

8. The cooking appliance of claim 7, wherein:
a plurality of the first front discharge ports and a plurality of the second front discharge ports are disposed at different positions on the coordinate plane,
the first front discharge ports and the second front discharge ports are alternately arranged along the rotation direction of the fan, and
the first guide protrusions and the second guide protrusions are alternately arranged along the rotation direction of the fan.

9. The cooking appliance of one of claims 6 to 8, wherein:
among quadrants of the coordinate plane divided by a front-rear axis and an up-down axis intersecting at the origin, the first front discharge port is disposed in at least one of a second quadrant and a fourth quadrant, and the second front discharge port is disposed in at least one of a first quadrant and a third quadrant,
in the first quadrant and the second quadrant, the first guide protrusion is disposed above the first front discharge port or the second guide protrusion is disposed above the second front discharge port, and
in the third quadrant and the fourth quadrant, the first guide protrusion is disposed below the first front discharge port or the second guide protrusion is disposed below the second front discharge port.

10. The cooking appliance of claim 9, wherein:
the first front discharge port comprises a first upper front discharge port disposed in the second quadrant and a first lower front discharge port disposed in the fourth quadrant, and
the first guide protrusion comprises a first upper guide protrusion disposed above the first upper front discharge port in the second quadrant and a first lower guide protrusion disposed below the first lower front discharge port in the fourth quadrant.

11. The cooking appliance of claim 9 or 10, wherein:
the second front discharge port comprises a second upper front discharge port disposed in the first quadrant and a second lower front discharge port disposed in the third quadrant, and
the second guide protrusion comprises a second upper guide protrusion disposed above the second upper front discharge port in the first quadrant and a second lower guide protrusion disposed below the second lower front discharge port in the third quadrant.

12. The cooking appliance of one of claims 1 to 11, wherein:
the fan is disposed rearward of the front surface of the fan cover, and
the guide protrusion forms a lateral plane protruding rearward from the front surface of the fan cover.

13. The cooking appliance of claim 12, wherein:
the guide protrusion is formed by cutting a portion of the front surface of the fan cover and bending it rearward about an upper or lower edge connected to the front surface of the fan cover, and
the front discharge port is formed at a portion of the front surface of the fan cover separated by the guide protrusion.
